# FASCICULE DE BREVET EUROPEEN

(11) **EP 1 947 366 B1**
(45) Date de publication et mention de la délivrance du brevet: **02.09.2015**
(21) Numéro de dépôt: 08100404.6
(22) Date de dépôt: 14.01.2008
(51) Int. Cl.: F16F 15/00

(54) **Système limitant la transmission des vibrations mécanique par filtrage fréquentiel**
System, das die mechanische Schwingungsübertragung durch Frequenzfilterung begrenzt
System limiting the transmission of mechanical vibrations by frequential filtering

(30) Priorité: 22.01.2007 FR 0752801
(43) Date de publication de la demande: 23.07.2008
(73) Titulaire: Commissariat à l'Énergie Atomique et aux Énergies Alternatives, 75015 Paris (FR)
(72) Inventeur: Despesse, Ghislain, 32120 Saint Egreve (FR)
(74) Mandataire: Ahner, Philippe

(56) Documents cités:
- EP-A2- 0 202 880
- WO-A-2006/106134
- FR-A1- 2 586 462
- JP-A- 60 151 111
- JP-A- 61 290 252
- JP-A- 63 172 037
- US-A- 5 301 111

## Description

### DOMAINE TECHNIQUE ET ART ANTÉRIEUR

La présente invention se rapporte à un dispositif apte à limiter la transmission des vibrations mécaniques entre un premier et un deuxième élément, notamment entre un support disposé sur le sol et un dispositif supporté par celui-ci.

Les vibrations présentent dans l'environnement, par exemple d'un appareil de grande précision, par exemple un outillage ou un dispositif de mesure peuvent perturber le fonctionnement de cet appareil. Par exemple le passage d'une personne à proximité du sol sur lequel repose l'appareil peut suffire à fausser l'opération qu'il est en train d'exécuter.

La transmission des secousses sismiques à un ouvrage de génie civil, par exemple aux piles d'un pont peut endommager celles-ci.

Ces problèmes de bruits acoustiques émis par des sources de vibration mécanique sont largement connus. La solution proposée généralement jusqu'à présent consiste à contrecarrer la source de vibration.

Jusqu'à présent, deux types de solution ont été apportés.

Le premier type de solution consiste à appliquer directement un effort opposé à cette vibration. Cependant, ce type de solution est limité par l'encombrement et l'énergie consommée. En effet, pour amortir une partie vibrante il faut mettre en mouvement une partie mobile dont la masse ne soit pas négligeable par rapport à la masse du système à amortir et pouvoir lui appliquer des forces d'accélération du même niveau que les forces qui sont appliquées à la partie vibrante.

Le deuxième type de solution est de contrecarrer le bruit acoustique en émettant une onde acoustique en opposition de phase par rapport au bruit acoustique à atténuer. Cependant ceci n'est réellement efficace que dans une zone limitée de l'espace.

US 5 301 111 divulgue le préambule de la revendication 1.

C'est par conséquent un but de la présente invention d'offrir un système efficace permettant de limiter les effets des vibrations extérieures sur un objet disposé dans le champ de la ou des sources de vibration dans un encombrement limité.

### EXPOSÉ DE L'INVENTION

Le but précédemment énoncé est atteint par un système formant une liaison physique entre deux parties, permettant la transmission des déplacements et des vibrations dans une bande de fréquence donnée par transmission des efforts dans cette bande de fréquence, par exemple à basse fréquence, et limitant la transmission des vibrations ou déplacements dans une autre bande de fréquence donnée en empêchant la transmission des efforts dans cette autre bande de fréquence, par exemple à hautes fréquences (c'est-à-dire par exemple les vibrations qui génèrent un bruit acoustique gênant pour l'utilisateur).

En d'autre terme, on réalise une liaison dont la raideur en effort est apte à varier suivant la fréquence. Ainsi lorsque la liaison est plus souple, celle-ci empêche la transmission des vibrations de la source vibratoire vers le milieu considéré, tandis que, lorsque la liaison est rigide, les vibrations de la pièce mobile sont transmises à l'autre pièce.

Selon la présente invention, on empêche la transmission des vibrations au lieu de tenter d'absorber les vibrations mécaniques ou le bruit acoustique comme dans l'état de la technique.

Selon la présente invention, on travaille en transmission d'effort et non en transmission de mouvement, ainsi il est possible de gérer des vibrations de type complexe, i.e. dont le signal comporte une partie basse fréquence et une partie haute fréquence. Les efforts transmis sont uniquement ceux de la gamme de fréquence souhaitée suivant le but à atteindre.

La présente invention prévoit donc de réduire la transmission des vibrations d'une partie sur l'autre en effectuant un asservissement de position sur une bande fréquentielle donnée. Au lieu d'appliquer des efforts qui imposent une position relative pour toutes les fréquences, on applique des efforts uniquement sur la bande de fréquence donnée pour assurer un positionnement donné dans cette bande de fréquence, et on laisse libre les déplacements relatifs dans une autre bande de fréquence.

Les moyens mis en oeuvre pour assurer ce positionnement relatif afin de transmettre ces efforts sont par exemple du type électromagnétique, électrostatique, piézoélectrique, électrique, magnétostrictif, ... dont la commande en tension ou en courant s'effectue sur la base de la fréquence des efforts que l'on souhaite transmettre.

La bande de fréquence, dans laquelle la transmission d'effort est assurée, s'effectue au moyen d'un filtre en fréquence, qui reçoit comme signal d'entrée la mesure d'une distance entre les parties en question, et délivre comme signal de sortie la mesure de la distance dans la bande de fréquence donnée.

La présente invention a alors principalement pour objet un système de liaison entre une première et une deuxième partie aptes à se déplacer l'une par rapport à l'autre, comportant une liaison apte à transmettre des efforts entre les première et deuxième parties, comprenant les caractéristiques selon la revendication 1.

Dans un exemple de réalisation avantageux, le filtre est un filtre passe-bas, ainsi seuls des efforts de basses fréquences sont transmis de la deuxième partie à la première partie.

La fréquence de coupure du filtre passe-bas peut alors être de quelques hertz, de façon à ce que les vibrations des machines environnantes (voisines de 50 HZ) et les vibrations de résonance vers le support (quelques dizaines de Hertz pour des bâtiments) ne soient pas transmises vers la machine-outil.

Le filtre peut avantageusement être dimensionné de telle sorte qu'en boucle ouverte le déphasage global du système soit maintenu aux alentours de -135° autour de la fréquence de coupure du filtre en boucle fermée, permettant d'obtenir un système stable sans utiliser de correcteur.

Le système selon la présente invention, muni d'un filtre passe-bas, peut également comporter une boucle d'asservissement munie de moyens de mesure d'une accélération de la première partie et d'un filtre passe-haut pour filtrer ladite accélération, ladite accélération filtrée étant transmise au comparateur pour être utilisée pour commander ladite liaison. Ce qui permet de supprimer, ou pour le moins, réduire les vibrations « internes » hautes fréquences de la première partie.

La boucle d'asservissement en vitesse peut alors comporter un filtre en fréquence et un comparateur d'une consigne de vitesse et d'une vitesse relative des première et deuxième partie, ladite consigne en vitesse provenant de la boucle d'asservissement en position, et la boucle d'asservissement en effort comportant un filtre en fréquence et un comparateur d'une consigne d'effort et d'un effort appliqué entre la première et la deuxième partie, ladite consigne en effort provenant de la boucle d'asservissement en vitesse.

De manière avantageuse, la boucle d'asservissement en effort comporte des moyens pour déterminer l'effort appliqué entre la première et la deuxième partie, lesdits moyens estimant l'effort appliqué au moyen de la position relative de la première et de la deuxième partie et d'un paramètre de commande de la liaison. Il est ainsi possible de se passer d'un capteur d'effort spécifique.

La liaison peut être du type électromagnétique, électrostatique piézoélectrique, électrique ou magnétostrictif.

La liaison peut être prévue pour transmettre un effort dans les deux sens de déplacement des première et deuxième parties.

Dans le cas d'une liaison électrostatique, celle-ci peut comporter un polymère diélectrique souple permettant une augmentation du champ électrique entre la première et la deuxième partie.

Dans un exemple de réalisation, la consigne imposée est constante.

La présente invention a également pour objet un ensemble d'une première et d'une deuxième partie, la première partie étant fixe, la deuxième partie étant mobile par rapport à la première partie, des moyens mécaniques étant prévus pour déplacer la deuxième partie par rapport à la première partie, et comportant un système de liaison selon la présente invention, dans lequel la boucle d'asservissement en vitesse comporte un filtre passe-bas et la boucle d'asservissement en effort comporte un filtre passe-bas.

La présente invention a également pour objet un appareillage comportant un dispositif et un support, comportant au moins une, avantageusement quatre systèmes de liaison selon la présente invention, pour suspendre ledit dispositif au support. Chaque système de liaison peut être relié au support et au dispositif par des liaisons rotules.

La présente invention a également pour objet un procédé de commande d'une liaison sans contact entre une première et une deuxième partie, comportant :
- la détermination de l'effort appliqué entre la première et la deuxième partie,
- le filtrage en fréquence de l'effort appliqué,
- la comparaison entre la valeur filtrée et la valeur de consigne d'effort,
- la commande en effort de ladite liaison en fonction du résultat de la comparaison,
- la détermination de la vitesse relative entre la première et la deuxième partie,
- le filtrage de la vitesse relative déterminée,
- la comparaison entre la vitesse relative filtrée et la valeur de consigne d'effort,
- l'ajustement de la consigne d'effort,
- la détermination de la position relative entre la première et la deuxième partie,
- la comparaison de la position relative filtrée à la valeur de la consigne de position,
- l'ajustement de la consigne de vitesse.

La détermination de l'effort appliqué peut avantageusement être obtenue par estimation de celui-ci à partir de la distance relative entre la première et la deuxième partie et d'au moins un paramètre de commande de la liaison.

### BRÈVE DESCRIPTION DES DESSINS

La présente invention sera mieux comprise à l'aide de la description qui va suivre et des dessins annexés, sur lesquels :
- la figure 1 est un exemple dé représentation schématique d'un système de liaison selon l'invention mettant en oeuvre un filtre passe-bas,
- la figure 2 est un schéma fonctionnel du système de liaison de la figure 1,
- les figures 3A à 3D sont des représentations schématiques de quatre variantes de réalisation de la liaison,
- la figure 4 est une représentation schématique d'un exemple de mise en oeuvre du système de liaison selon la présente invention à une machine-outil,
- la figure 5 est une autre représentation d'une liaison mettant en oeuvre un actionneur électrostatique,
- la figure 6 est une vue en perspective d'un exemple de réalisation d'une liaison pour le système selon la présente invention,
- la figure 7 est une représentation schématique d'une variante de réalisation d'un système de liaison selon l'invention,
- la figure 8 est une représentation schématique d'un système de liaison selon l'invention mettant en oeuvre un filtrage passe-haut,
- la figure 9 est un schéma fonction d'un premier exemple d'un système selon l'invention à trois niveaux d'intégration,
- la figure 10 est un schéma fonctionnel d'un deuxième exemple d'un système selon l'invention à trois niveaux d'intégration,
- la figure 11 est un schéma fonctionnel d'un système selon l'invention sans capteur d'effort.

### EXPOSÉ DÉTAILLÉ DE MODES DE RÉALISATION PARTICULIERS

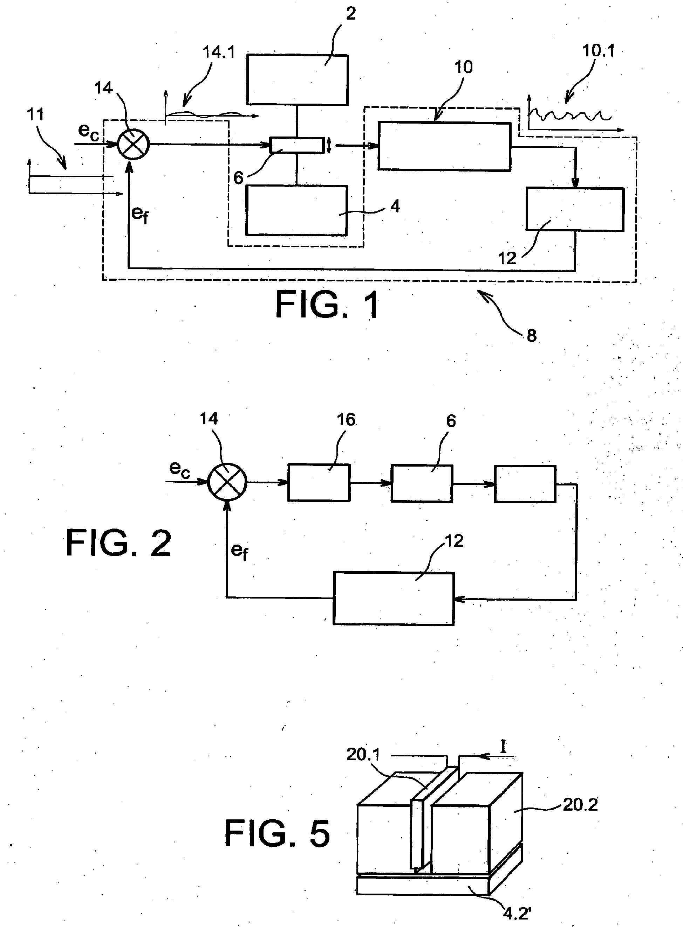

Le système de liaison selon la présente invention, dont un exemple de réalisation est représenté schématiquement sur la figure 1, est destiné à lier physiquement une première partie 2 et une deuxième partie 4 en effort dans une gamme de fréquence donnée.

La première 2 et la deuxième 4 parties sont aptes à se déplacer l'une par rapport à l'autre selon les flèches 3.

Le système de liaison selon la présente invention comporte une liaison physique 6, de raideur variable en fréquence, et des moyens de commande 8 en fréquence de ladite raideur.

La liaison physique 6 maintient la première partie 2 et la deuxième partie 4 sans contact et peut être obtenue par des actionneurs électromagnétiques, électrostatiques, piézoélectriques, électriques, magnétostrictifs, ou par tout autre moyen permettant une transmission en effort sans contact.

On appellera actionneur dans la suite de la description les moyens faisant partie de la liaison et permettant d'appliquer un effort entre la première et la deuxième partie.

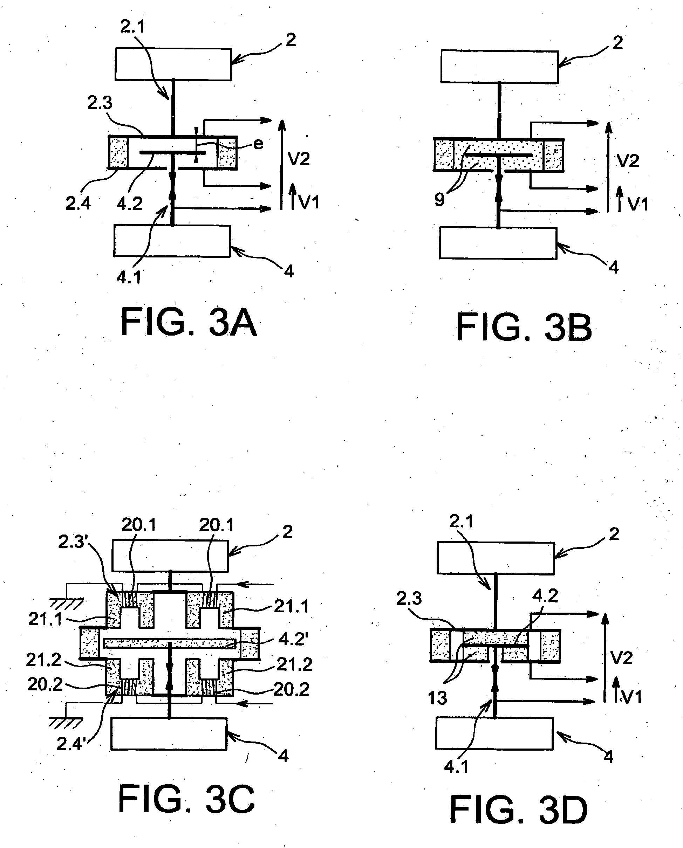

Différents exemples d'actionneur seront décrits en détail par la suite, en relation avec les figures 3A à 3D.

La liaison 6 (visible sur la figure 3A) comporte un premier élément 2.1 solidaire en déplacement de la première partie 2 et un deuxième élément 4.1 solidaire en déplacement de la deuxième partie 4. Lors d'un déplacement relatif de la partie 4 par rapport à la partie 1, la distance e ou entrefer séparant l'élément 2.1 et l'élément 4.1 varie, et c'est sur la base de la variation de cette distance e que la raideur en fréquence de la liaison 6 est modifiée.

Les moyens de commande 8 comportent des moyens pour effectuer un asservissement en fréquence de la position relative de la partie 2 et de la partie 4. Pour cela, les moyens de commande 8 comportent des moyens 10 pour mesurer la distance e ou plus précisément la variation de la distance e en fonction du temps, représenté schématiquement par le diagramme 10.1. Les moyens 10 peuvent comporter des capteurs de position de position relative entre les éléments 2 et 4 positionnés entre les deux éléments.

Ces capteurs peuvent être par exemple du type optique, capacitif ou inductif.

La distance peut être mesurée directement par l'actionneur lui-même, en mesurant soit la capacité si c'est un actionneur de type capacitif, soit la réluctance si c'est un actionneur de type magnétique.

Les moyens de commande comportent également un filtre en fréquence 12 pour filtrer la variation de l'entrefer e, et ne conserver que la variation de l'entrefer e dans la bande de fréquence fixée par le filtre.

Le filtre 12 peut être du type passe-bas, passe-haut ou passe-bande suivant l'application, comme nous le verrons par la suite.

Les moyens de commande 8 comportent également un comparateur 14.1 destiné à recevoir d'une part une valeur de consigne ec de l'entrefer et la valeur de l'entrefer filtré, désigné ef.

Le comparateur 14 calcule un écart 14.1 ou erreur entre la consigne ec et la valeur de l'entrefer filtré ef, cet écart est ensuite utilisé pour commander la liaison 6 afin de l'annuler.

Dans l'exemple représenté sur la figure 1, la consigne de l'entrefer e est constante (schématisée sur le graphique 11) et le filtre utilisé 12 est un filtre de type passe-bas. En sortie du filtre 12, le signal de la variation de l'entrefer est donc un signal basse fréquence.

Le comparateur fournit alors une erreur basse fréquence, les moyens de commande commandent les actionneurs en basses fréquences afin d'annuler cette erreur. Pour cela, seuls les efforts basse fréquence de la partie 4 sont transmis à la partie 2.

Par conséquent, en basses fréquences l'entrefer e est maintenu sensiblement constant, tandis qu'en hautes fréquences cette distance varie librement et le déplacement de la partie 4 est libre par rapport à celui de la partie 2.

Cela est schématisé par les graphiques 15, 17 des déplacements en fonction du temps de la partie 2 et de la partie 4 respectivement.

Par ailleurs, en hautes fréquences, les vibrations sont généralement de plus faible amplitude, ainsi l'actionneur peut n'agir que sur une très faible course, typiquement de quelques dizaines de micromètres. La liaison 6 peut donc être avantageusement très compacte et avoir une faible consommation, même si les efforts à transmettre sont importants.

En effet, dans le cas d'une liaison de type électrostatique ou électromagnétique, la capacité ou la reluctance respectivement, et donc l'efficacité en terme d'effort et de consommation, est d'autant plus grande que l'entrefer e qui est équivalent à la course possible des éléments 2.4.1 des parties 2 et 4 respectivement, est petit.

Sur la figure 2, on peut voir un schéma fonctionnel du système de liaison de la figure 1 dans lequel un correcteur 16 a été introduit entre un comparateur 14 et la liaison 6, le correcteur permettant d'assurer la stabilité du système.

Il est également possible de prévoir avantageusement un filtre dimensionné de manière à ce que le système soit stable, ce qui permet d'éviter l'utilisation d'un correcteur, appelé par la suite filtre de type amélioré.

De manière générale, un système est stable en boucle fermée lorsque la phase en boucle ouverte, pour un gain supérieur ou égal à 0 dB ne descend pas jusqu'à -180°. On prend généralement une marge de 45°, ainsi on considère que jusqu'à -135°, le système sera suffisamment stable en boucle fermée.

On dimensionne alors le filtre de manière à ce que le déphasage global du système en boucle ouverte soit maintenu aux alentours de -135° autour de la fréquence de coupure désirée en boucle fermée, par exemple en ajoutant des circuits à avance ou à retard de phase. Il est avantageux d'étendre sur quelques décades l'imposition de la phase autour de -135°, ce qui permet de maximiser la décroissance du gain avec la fréquence non seulement à la fréquence de coupure désirée, mais aussi au-delà afin que le gain en très basse fréquence puisse être très élevé afin d'assurer une très bonne contre-réaction de l'asservissement et au contraire minimiser au mieux l'effet de la contre-réaction en très haute fréquence.

Le système comportant un tel filtre suit en boucle fermée la consigne jusqu'à environ la fréquence de coupure recherchée, puis au-delà ne répond plus aux signaux de consigne. Une liaison rigide est alors établie entre la consigne et la sortie en basse fréquence et une liaison très souple est établie en haute fréquence.

Il est également possible d'établir un modèle d'estimation de l'effort appliqué à partir d'une mesure de la position relative et des paramètres de commande de l'actionneur, appelé modèle inverse de l'effort, ce qui permet d'offrir un système de contrôle d'effort sans capteur d'effort, réduisant ainsi le coût de revient du système.

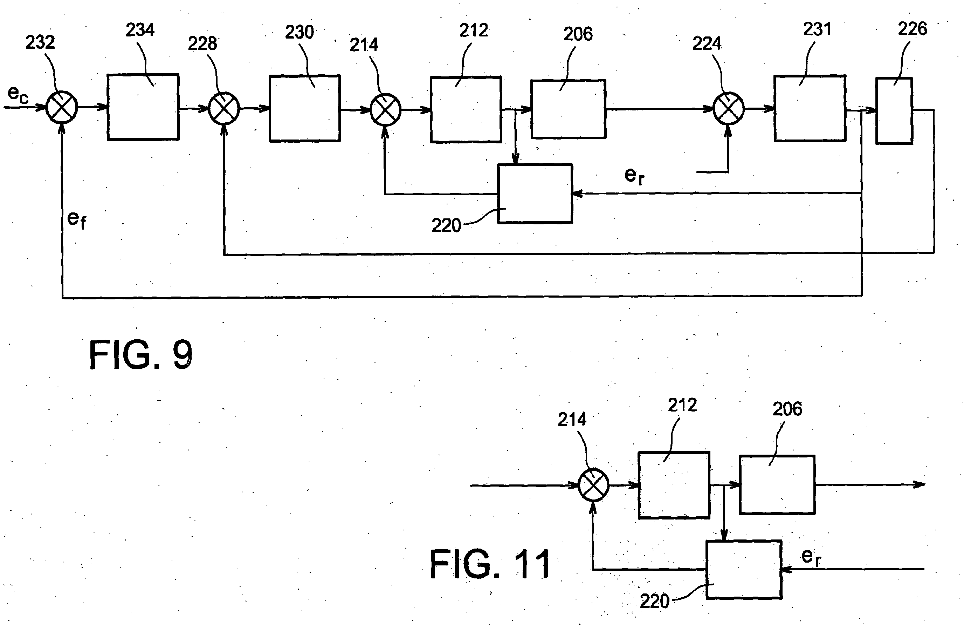

Sur la figure 11, on peut voir un tel système. Celui-ci comporte en entrée un effort de consigne, un filtre passe bas 212 dimensionné tel que décrit précédemment, un actionneur 206, un comparateur 214 et un modèle inverse d'effort 220.

Sur le circuit de la figure 11, le modèle inverse d'effort reçoit en entrée la position relative entre la première partie 2 et de la deuxième partie 4 et des paramètres de commande de l'actionneur, par exemple dans le cas d'un actionneur piézoélectrique, un paramètre de commande est la tension, dans le cas d'un actionneur électromagnétique, un paramètre de commande est le courant.

Ce modèle reçoit en entrée la position relative des deux éléments de la liaison.

Le modèle peut alors estimer l'effort appliqué par l'actionneur.

C'est cette valeur estimée qui est renvoyée sur le comparateur 214 et comparée à la valeur de consigne.

On peut améliorer encore davantage la stabilité du système selon la présente invention en introduisant plusieurs niveaux d'intégration comme cela est représenté sur la figure 9.

En effet, dans un système selon l'invention, le paramètre à contrôler correspond à plusieurs niveaux d'intégration du paramètre sur lequel on est capable d'agir, par exemple la position par rapport à un générateur d'effort (actionneur), qui agit directement sur l'accélération ; il est alors particulièrement avantageux de réaliser un système à plusieurs boucles.

Dans le cas où le système comporte une masse mobile, le fonctionnement de l'actionneur peut être modélisé en partie par une double intégration, il est alors avantageux de réaliser un système à deux boucles correspondants aux deux niveaux d'intégration.

Dans le cas d'un système selon la présente invention, celui-ci travaille en effort, ce qui correspond à travailler en accélération du fait de la relation suivante :
F = Ma
F étant l'effort,
M étant la masse de la partie mobile,
a étant l'accélération.

Le paramètre sur lequel on peut agir est donc l'accélération. Or le paramètre que l'on veut contrôler est la position relative des deux pièces mobiles l'une par rapport à l'autre ou l'entrefer.

L'entrefer étant l'intégrale double de l'accélération, on prévoit alors deux boucles d'asservissement.

Ainsi pour contrôler la position relative des deux parties 2 et 4, i.e. effectuer un asservissement en position, par un asservissement en effort exercé entre les deux parties, on utilise une étape intermédiaire d'asservissement en vitesse.

Ainsi on évite les risques d'instabilité pouvant subvenir lors d'une double intégration dans le cas d'un contrôle de la position relative directement à partir de l'effort.

Le système selon l'invention comporte alors trois boucles d'asservissement B1, B2, B3.

Une première boucle assure un asservissement en effort, une deuxième boucle assure un asservissement en vitesse et une troisième boucle assure un asservissement en position relative.

La première boucle B1 contrôlant l'effort, est intégrée à la deuxième boucle B2 pour contrôler la vitesse relative, elle-même intégrée à la troisième boucle B3 pour contrôler la position relative (figure 9).

La troisième boucle B3 correspond à la boucle de la figure 2, à l'intérieur de laquelle la première B1 et la deuxième B2 boucle ont été intégrées.

La troisième boucle B3 comporte un filtre passe-bas 234 de type amélioré, dont la sortie est reliée à l'entrée de la boucle B2, un actionneur 206, des moyens 231 de mesure de la position relative des parties 2 et 4, dans l'exemple représenté, ces moyens comportent deux capteurs de mesure de la position des parties 2 et 4 et un comparateur 224, et un comparateur 232 recevant en entrée la consigne d'entrefer et la position relative des parties 2 et 4.

La deuxième boucle B2 comporte un comparateur 228 qui reçoit la sortie du comparateur 232 de la boucle B3 et la vitesse relative réelle, un filtre passe bas 230 de type amélioré, dont la sortie est reliée à la première boucle B1, et des moyens de détermination 226 de la vitesse relative des deux parties 2 et 4. Il peut s'agir par exemple de capteurs ou de moyens de calcul de la dérivée première de la position relative.

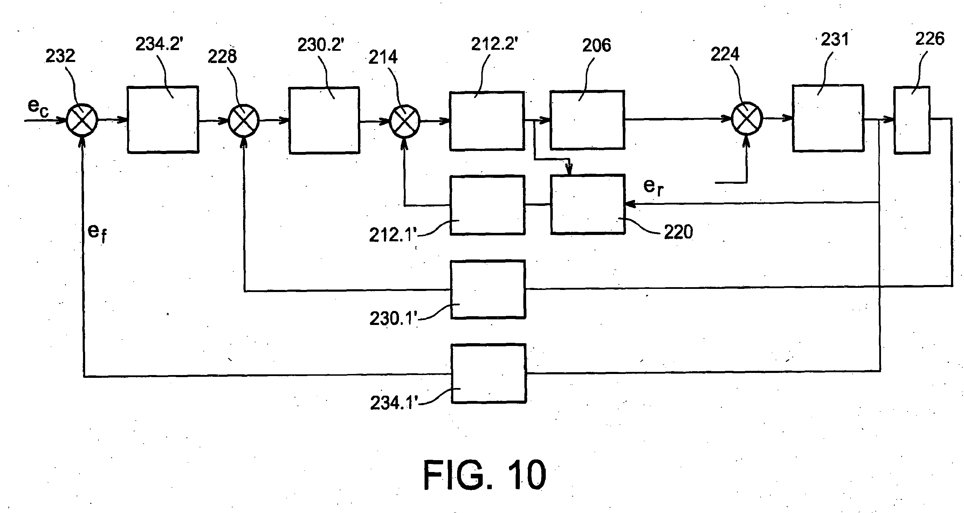

La première boucle B1 comporte un comparateur 214 recevant en entrée la sortie du filtre passe-bas amélioré 230 de la boucle B2, un filtre passe bas 212 en effort du type amélioré relié à l'actionneur 206 et dans l'exemple représenté le modèle inverse 220 de l'effort de la figure 10 pour déterminer l'effort appliqué.

On pourrait bien entendu mettre en oeuvre un capteur d'effort classique pour déterminer l'effort appliqué.

Sur la figure 12, on peut voir un autre exemple de système, dans lequel les filtres utilisés ne sont pas du type amélioré mais de type simple associés à un correcteur.

La boucle B1 comporte un filtre passe-bas 212.1' et un correcteur en effort 212.2'.

La boucle B2 comporte un filtre passe-bas 230.1' et un correcteur en vitesse 230.2'.

La boucle B3 comporte un filtre passe-bas 234.1' et un correcteur en position 234.2'.

Nous allons maintenant expliquer le fonctionnement du système de la figure 10.

L'effort appliqué est tout d'abord déterminé, par exemple par mesure directe ou par estimation au moyen d'un modèle inverse d'effort.

Puis l'effort est filtré en fréquence par le filtre 212.1', et une comparaison a lieu entre la valeur filtrée et la valeur de consigne d'effort.

On effectue alors une commande en effort en fonction du résultat de la comparaison.

Une détermination de la vitesse relative des deux parties 2 et 4 a ensuite lieu, soit par mesure directe, soit par dérivation de la position relative des deux parties 2 et 4.

La vitesse relative est filtrée par le filtre 230.1'. Puis le résultat est comparé à la valeur de vitesse de consigne.

Il y a alors un ajustement de la consigne d'effort, qui est appliquée au comparateur 214.

Il y a ensuite détermination de la position relative des deux parties, filtrage par le filtre 234.1' et comparaison à la valeur de la consigne de position.

Puis un ajustement de la consigne de vitesse en entrée du comparateur 228 a lieu en conséquence.

Dans les cas de systèmes complexes, par exemple comportant une partie mobile modélisable par plusieurs masses reliées par des ressorts, le système peut devenir du troisième ordre, dans ce cas le système comporte plus de deux niveaux d'intégration.

Dans le schéma fonctionnel de la figure 2, le comparateur est prévu après le filtre 12, mais on pourrait prévoir de disposer le filtre 12 après le comparateur 14. En effet, lorsque la consigne ec est constante, le filtrage du signal de la mesure de l'entrefer ou celui du signal de la mesure de l'entrefer retranché d'un signal constant donne un même signal de sortie.

Sur les figures 3A à 3D, nous pouvons voir des représentations de principe de différents types de d'actionneur utilisables dans le système de liaison selon la présente invention.

Sur la figure 3A il s'agit d'une liaison comportant un actionneur de type électrostatique.

L'élément 2.1 de la partie 2 comporte, par exemple un boitier délimité selon la direction de déplacement de la partie 4 par rapport à la partie 2 par une première paroi 2.3 et une deuxième paroi 2.4 parallèles. L'élément 4.1 de la partie 4 comporte une plaque conductrice 4.2 montée mobile entre la paroi 2.3 et la paroi 2.4, l'application d'une tension V2 entre la plaque 4.2 et la paroi 2.3 provoque le rapprochement de la partie 2 et de la partie 4 et l'application d'une tension V1 entre la plaque 4.2 et la paroi 2.4 provoque l'éloignement de la partie 4 et de la partie 2.

La gestion des tensions V1 et V2 s'effectue en fréquence dans la bande de fréquence donnée dans laquelle on souhaite transmettre un effort, i.e. dans la bande du filtre 12, de manière à maintenir la partie 1 et la partie 2 dans une position moyenne.

Sur la figure 3B, on peut voir une variante de réalisation de l'actionneur de type électrostatique, dans laquelle un polymère diélectrique 9 souple est inséré entre les parois 2.3, 2.4 et la plaque mobile 4.2.

Cette réalisation présente l'avantage de pouvoir atteindre des valeurs de champ électrique plus élevées par rapport à la réalisation de la figure 3A et donc de pouvoir transmettre des efforts plus élevés.

Sur la figure 3C, on peut voir une liaison sans contact munie d'un actionneur du type électromagnétique.

L'actionneur comporte un boîtier délimité dans le sens d'écartement/de rapprochement des parties 2 et 4, par des parois 2.3', 2.4' sensiblement parallèles, duquel est solidaire en mouvement la partie 2, et entre lesquels une plaque aux propriétés magnétiques 4.2' peut se déplacer. La paroi 2.3' comporte deux premiers bobinages 20.1 montés autour de deux premiers noyaux 21.1 et la paroi 2.4' comporte deux deuxièmes bobinages 20.2 disposés autour de deux deuxièmes noyaux 21.2.

Les bobinages 20.1, 20.2 et les noyaux 21.1, 21.2 sont disposés par paire, de manière à pouvoir appliquer deux champs magnétiques de façon à ce que les efforts appliqués sur la plaque mobile 4.2' soient de sens opposés.

Ainsi en faisant passer un courant dans l'une ou l'autre des paires de bobines, on peut rapprocher ou éloigner les parties 2, 4.

Sur la figure 3D, on peut voir une liaison de type à actionnement piézoélectrique.

La liaison a sensiblement la même structure que celle représentée aux figures 3A et 3C, par contre un matériau piézoélectrique 13 est disposé entre la plaque 4.2 de l'élément 4.1 et la paroi 2.3 et la paroi 2.4. Ainsi en pilotant les tensions V1 et V2 telles que décrites précédemment, en fonction de l'orientation de la polarisation piézoélectrique il est possible de faire se rapprocher ou s'éloigner les parties 2 et 4.

Ainsi, grâce à la présente invention et à la mise en oeuvre d'un filtre passe-bas, il est possible d'éliminer les efforts transmis en hautes fréquences, par exemple il est possible d'éliminer complètement le bruit acoustique transmis d'une partie sur l'autre ou de vibrations gênantes dans le dispositif mettant en oeuvre le système de liaison selon la présente invention.

Par ailleurs, ce système de liaison permet d'avoir une souplesse très élevée en hautes fréquences et un positionnement très précis en basses fréquences quels que soient les efforts statiques à transmettre, et ceci contrairement à une simple liaison souple du type busching ou coussinet en caoutchouc de l'état de la technique qui n'offre qu'une seule souplesse dans toute la bande de fréquence considéré.

En outre, comme cela a été dit précédemment, la présente invention permet l'actionnement sur une faible course et en basses fréquences, ce qui permet de transmettre des efforts importants avec un encombrement réduit et une très faible consommation.

Enfin, grâce à la présente invention, il est possible de mesurer des efforts transmis d'une partie sur l'autre par une simple mesure de courant ou de tension appliquée à la liaison en combinaison avec la mesure de position : cette liaison forme donc un capteur d'effort indéformable.

En effet, comme cela a été expliqué précédemment, connaissant les caractéristiques de commande de l'actionneur, on peut en déduire l'effort exercé par une partie sur l'autre. D'autre part, le système est asservi, toute déformation engendrée par cet effort est immédiatement compensée, contrairement à un capteur piézoélectrique ou piézorésistif.

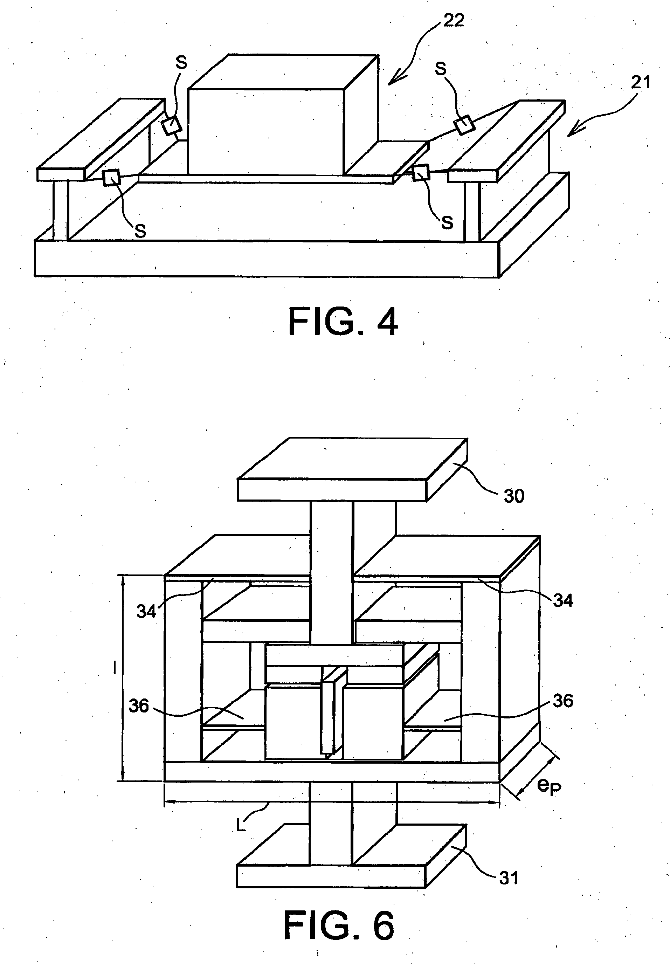

Sur la figure 4, on peut voir un exemple de réalisation d'une machine-outil mettant en oeuvre quatre systèmes de liaison selon la présente invention. La machine-outil comporte un support 21 et une machine-outil 22 à proprement dit, la machine-outil 22 est suspendue sur le support 21 au moyen de quatre systèmes S de liaison selon la présente invention fixés, dans l'exemple représenté, aux quatre coins d'une embase 24 de la machine-outil 22 et au support 21.

Chaque liaison de chacun des systèmes de liaison S est donc commandée indépendamment, de la manière décrite précédemment en relation avec les figures 1 et 2.

Dans le cas d'une machine-outil de précision, on recherche en particulier la réduction de la transmission des vibrations, que peut connaître le support 21, vers la machine-outil 22 tout en garantissant un positionnement précis de celle-ci par rapport au support 21.

Grâce à la présente invention, il est possible de maintenir une position moyenne de la machine-outil par rapport au support, même si la masse de la machine subit des variations ou si le centre de gravité change d'une utilisation à l'autre, ceci en ajustant les tensions V1 et V2, dans le cas d'un actionneur électrostatique, ou les courants, dans le cas d'un actionneur électromagnétique.

Par ailleurs, grâce à la présente invention, il est possible de garantir la mise à niveau de la machine-outil et d'isoler quasiment la machine-outil des mouvements que peut connaître le support, par exemple ceux provoqués par le passage d'une personne à proximité de l'endroit où est placée la machine-outil.

Dans le cas de la machine-outil, les systèmes de liaison, et en particulier les actionneurs ne sont pas nécessairement bidirectionnels, en effet le poids de la machine-outil qui se repartit sur les quatre liaisons tend à éloigner les éléments de la machine-outil participant à la liaison des éléments du support participant à la liaison. Il suffit donc de prévoir de pouvoir exercer un effort pour rapprocher ces éléments. Des actionneurs unidirectionnels sont donc suffisants.

La raideur obtenue par exemple en basses fréquences dans l'exemple représenté est assurée selon l'invention par la boucle d'asservissement obtenue par les moyens de commande 10.

En hautes fréquences, toujours dans l'exemple représenté, les systèmes de liaison deviennent souples et donc évitent la transmission des efforts en provenance, par exemple des vibrations du support. Une action directe sur les efforts transmis du support 21 à la machine-outil 22 et non sur la position relative du support 21 par rapport à la machine-outil, et plus généralement de la partie 2 par rapport à la partie 1, permet de contrôler la transmission des efforts d'une partie sur l'autre, notamment en fonction de leur fréquence.

L'attache des quatre systèmes de liaison sur la machine-outil 22 et sur le support 21 peut s'effectuer avantageusement aux moyens de liaison rotule, ainsi les systèmes de liaison sont uniquement sollicités selon leur axe longitudinal.

Sur la figure 5, on peut voir un exemple de réalisation pratique des actionneurs de type électromagnétique d'un système de liaison de type électromagnétique. A la différence des moyens représentés sur la figure 3C, ceux de la figure 5 ne comportent qu'une seule bobine 20.1.

A titre d'exemple, on considère une charge de 100kg à répartir entre quatre systèmes de liaison selon la présente invention. En supposant que la masse ne soit pas répartie de manière uniforme, on peut faire l'hypothèse que chaque système doit au plus supporter 50 kg, soit 500N. Des actionneurs selon la présente invention dont le volume est de l'ordre de 34 cm³ sont alors suffisants.

Sur la figure 6, on peut voir un exemple de réalisation pratique d'un système de liaison selon la présente invention pouvant être mis en oeuvre dans la machine-outil représentée sur la figure 4, et utilisant les actionneurs de la figure 5.

Ce système de liaison est du type unidirectionnel, et ne peut qu'exercer un effort de rapprochement entre les deux parties mobiles.

Ce système de liaison comporte un élément 30 d'attache au support 21 et un élément d'attache 31 à la machine-outil 22.

Les actionneurs sont interposés entre les deux éléments d'attache 30, 31.

Des moyens de guidage 34, 36 sont prévus pour guider le déplacement relatif des deux éléments d'attache, par exemple formés par des poutres souples métalliques. En effet, l'amplitude de déplacement étant de l'ordre de 100 µm, l'élasticité d'un métal ou alliage métallique est suffisante.

Il est par ailleurs prévu, de manière avantageuse, des moyens mécaniques de butée axiale afin de limiter le déplacement relatif des éléments d'attache 30, 31, par exemple en cas de rupture de la boucle d'asservissement ou de coupure d'alimentation électrique. Les deux éléments d'attache viennent alors en contact mécanique.

On peut donner, à tire d'exemple, les dimensions suivantes pour le système de liaison de la figure 6 dans les conditions données en relation avec la figure 5 : le système a une largeur L de 6 cm, une longueur 1 de 7 cm et une épaisseur ep de 3cm, ce qui représente un volume de l'ordre de 126 cm³.

Cet encombrement est proche de celui des buschings utilisés de manière classique pour ce genre d'application, mais en offrant une efficacité améliorée dans l'élimination des vibrations. En effet, on obtient un très bon positionnement en statique, puisque les variations importantes de position sont évitées lorsque la charge varie, et une très bonne souplesse en hautes fréquences, du fait de la raideur propre du système de guidage qui peut être de plusieurs décades en dessous de celle des buschings.

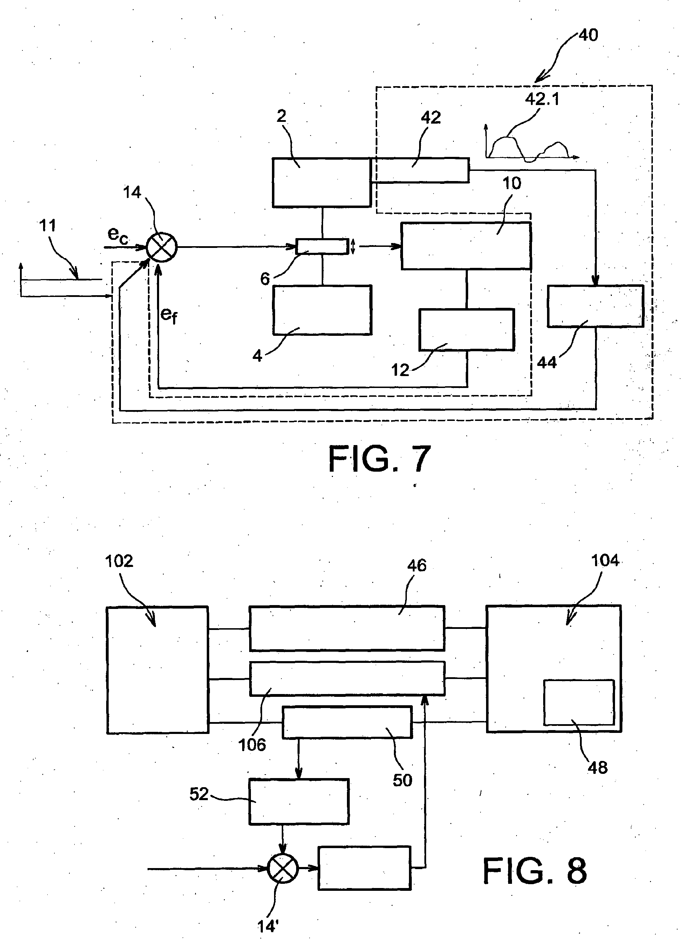

Sur la figure 7, on peut voir une variante de réalisation d'un système de liaison selon la présente invention permettant d'empêcher à la fois la transmission des vibrations de la partie 4 à la partie 2, et les vibrations créées au sein de la partie 2.

Pour cela on ajoute une deuxième boucle d'asservissement 40, comportant des moyens 42 de mesure de l'accélération au niveau de la partie 2, représentée schématiquement par le graphique 42.1 et un filtre passe-haut 44 de signal de l'accélération.

Le signal de sortie du filtre passe-haut est alors renvoyé sur le comparateur 14. Ce signal passe-haut est soustrait à la consigne pour que l'actionneur agisse de façon à s'opposer à ces vibrations haute fréquence d'une des deux parties en absolu et non en relatif.

La partie 4 accompagne alors le déplacement de la partie 2 en basses fréquences, ce qui permet d'assurer un positionnement précis, et les accélérations de hautes fréquences de la partie 2 sont annulées en appliquant des efforts sur la partie 4, de manière à annuler le bilan des efforts qui s'appliquent sur la partie 2 en hautes fréquences.

On utilise donc la partie 4 comme intermédiaire pour agir sur la partie 2, afin de lutter contre les vibrations apparaissant dans la partie 2.

A titre d'exemple, la fréquence de coupure du filtre passe-bas 12 peut être choisie de l'ordre de quelques hertz, de façon à ce que les vibrations des machines environnantes (voisines de 50 HZ) et les vibrations de résonance vers le support (quelques dizaines de Hertz pour des bâtiments) ne soient pas transmises vers la machine-outil.

Quant au filtre passe-haut 44, la fréquence de coupure peut être de quelques dizaines de Hertz légèrement plus élevée que celle du filtre passe-bas 12, de manière à ce que l'action d'annulation de l'accélération de hautes fréquences de la partie 2 n'interfère pas avec l'action de maintien en basses fréquences de la position relative des parties 2 et 4.

En outre, comme cela a déjà été écrit précédemment il peut être avantageux d'ajouter dans la, ou les boucle(s) d'asservissement un correcteur afin d'assurer la stabilité du système.

Sur la figure 8, on peut voir un exemple de réalisation d'un ensemble de deux parties, dont l'une est fixe et l'autre est mobile, mettant en oeuvre un système de liaison selon la présente invention dans lequel on souhaite empêcher tout mouvement brusque ou toute vibration (hautes fréquences) d'une partie mobile par rapport à une partie fixe.

Le système de liaison est disposé entre une première partie 102 fixe et une deuxième partie 104 apte à se déplacer par rapport à la première partie fixe 102 à l'aide d'un système de déplacement 46 normalement basses fréquences, et comporte une liaison physique 106, mais qui, par le fait de sa technologie, engendre aussi des vibrations plus hautes fréquences. Par ailleurs la partie mobile 104 comporte aussi en son sein une source de vibration mécanique 48.

Pour éliminer les vibrations hautes fréquences de la partie mobile 104, la présente invention prévoit d'utiliser dans la boucle de retour un filtre passe-haut 52. Il s'agit, cette fois-ci, d'une liaison très souple en basses fréquences et rigide en hautes fréquences.

Le système comporte également un capteur de la position 50 relative de la partie 102 et de la partie 104. Cette mesure est envoyée dans le filtre passe-haut 52, puis le signal de sortie est entré dans le comparateur 14' auquel on impose une consigne nulle.

Le signal en sortie du comparateur est ensuite envoyé vers le système de liaison, en particulier les actionneurs.

La première partie 102 forme un élément de référence.

Dans cet exemple, on impose un déplacement relatif hautes fréquences nul et on laisse complètement libres les déplacements relatifs basses fréquences.

Le système génère alors uniquement des efforts hautes fréquences afin de limiter les vibrations indésirables de la partie mobile et ne transmet presque aucun effort basses fréquences qui pourrait perturber le système de déplacement. La première partie étant fixe, elle n'a pas de vibrations hautes fréquences, ainsi la deuxième partie mobile 4 n'a pas de déplacement hautes fréquences.

De même, on peut envisager par exemple de limiter les vibrations d'un élément de commande, type levier de commande ou un volant de direction en plaçant une liaison rigide en hautes fréquences et souple en basses fréquences entre l'élément de commande et l'habitacle. Les vibrations habituellement transmises à l'élément de commande via la liaison mécanique qui le lie au système à commander sont ainsi bloquées par la liaison selon l'invention placée entre l'élément de commande et le support de commande (habitacle) avec lequel l'utilisateur est mécaniquement lié.

La présente invention s'applique notamment pour remplacer des bushings ou coussinets utilisés dans l'industrie, dans les systèmes antisismiques pour le génie civil, par exemple sur les piles de pont, dans les systèmes de mesure d'effort, puisque l'invention permet des mesures précises et les systèmes sont indéformables en statique.

La présente invention s'applique également aux systèmes antibruit pour les sous-marins (pour les attaches de tuyau, de machines, de coque intérieure...) et aux systèmes de limitation des déplacements relatifs en hautes fréquences.

## Revendications

1. Système de liaison entre une première (2) et une deuxième partie (4) aptes à se déplacer l'une par rapport à l'autre, comportant une liaison (6) apte à transmettre des efforts entre les première (2) et deuxième (4) parties et des moyens d'asservissement de ladite liaison (6) comportant des moyens de mesure (10) d'une distance (e) séparant les première et deuxième parties (2, 4), un filtre en fréquence (12) des dites mesures, ledit filtre en fréquence laissant passer les valeurs des dites mesures dans une bande fréquence donnée et des moyens (14) pour comparer ces valeurs filtrées avec une consigne (ec), lesdits moyens d'asservissement commandant la liaison (6) de manière à ce qu'elle ne transmette les efforts que dans la bande de fréquence donnée, **caractérisé en ce que** les moyens d'asservissement comprennent une première boucle d'asservissement (B1) qui est une boucle d'asservissement en effort ayant une consigne d'effort provenant d'une deuxième boucle d'asservissement, cette dernière étant une boucle d'asservissement en vitesse (B2) ayant une consigne de vitesse provenant d'une troisième boucle d'asservissement (B3) en position relative desdites première et deuxième parties.

2. Système selon la revendication 1, dans lequel la première boucle d'asservissement comporte un filtre en fréquence (212, 212.1') et un comparateur de la consigne d'effort et d'un effort appliqué entre la première et la deuxième partie, et dans lequel la deuxième boucle d'asservissement comporte un filtre en fréquence (230, 230.1') et un comparateur (228). de la consigne de vitesse et d'une vitesse relative des première et deuxième partie.

3. Système selon la revendication 1 ou 2, dans lequel la première boucle d'asservissement comporte des moyens pour déterminer l'effort appliqué entre la première (2) et la deuxième partie (4), lesdits moyens estimant l'effort appliqué au moyen de la position relative de la première (2) et de la deuxième (4) partie et d'un paramètre de commande de la liaison.

4. Système de liaison selon l'une des revendications 1 à 3, dans lequel la liaison (6, 106) est du type électromagnétique, électrostatique piézoélectrique, électrique ou magnétostrictif.

5. Système de liaison selon la revendication 4, dans lequel la liaison électrostatique comporte un polymère diélectrique souple permettant une augmentation du champ électrique entre la première et la deuxième partie.

6. Système selon l'une des revendications 1 à 5, dans lequel la liaison (6, 106) peut appliquer un effort dans les deux sens de déplacement des première et deuxième parties.

7. système selon l'une des revendications 1 à 6, dans lequel la consigne (ec) est constante.

8. Système selon l'une des revendications 1 à 7, dans lequel le filtre (12) est un filtre passe-bas, ainsi seuls des efforts de basses fréquences sont transmis de la deuxième à la première partie.

9. Système selon la revendication précédente, dans lequel la fréquence de coupure du filtre passe-bas est de quelques hertz, de l'ordre de 50 Hz.

10. Système selon l'une quelconque des revendications précédentes, dans lequel le filtre est dimensionné de telle sorte qu'en boucle ouverte le déphasage global du système soit maintenu aux alentours de -135° autour de la fréquence de coupure du filtre en boucle fermée.

11. Système selon la revendication 8 ou 9, comportant une boucle d'asservissement en accélération (40) munie de moyens de mesure (42) d'une accélération de la première partie (2) et d'un filtre passe-haut (44) pour filtrer ladite accélération, ladite accélération filtrée étant transmise au comparateur (14) pour être utilisée pour commander ladite liaison (6).

12. Ensemble d'une première et d'une deuxième partie, la première partie étant fixe, la deuxième partie étant mobile par rapport à la première partie, des moyens mécaniques étant prévus pour déplacer la deuxième partie par rapport à la première partie, et comportant un système de liaison selon l'une des revendications 1 à 11, dans lequel la boucle d'asservissements en vitesse comporte un filtre passe-bas et la boucle d'asservissement en effort comporte un filtre-passe-bas.

13. Appareillage comportant un dispositif (22), un support (21), et au moins un système de liaison (S), avantageusement quatre, selon la revendication 1 à 11, pour suspendre ledit dispositif. (22) au support (21).

14. Appareillage selon la revendication 13, dans lequel chaque système de liaison (S) est relié au support (21) et au dispositif (22) par des liaisons rotules.

15. Procédé de commande d'une liaison sans contact entre une première et une deuxième partie, comportant :
- la détermination de l'effort appliqué entre la première et la deuxième partie,
- le filtrage en fréquence de l'effort appliqué,
- la comparaison entre la valeur filtrée et la valeur de consigne d'effort,
- la commande en effort de ladite liaison en fonction du résultat de la comparaison,
- la détermination de la vitesse relative entre la première et la deuxième partie,
- le filtrage en fréquence de la vitesse relative déterminée,
- la comparaison entre la vitesse relative filtrée et la valeur de consigne d'effort,
- l'ajustement de la consigne d'effort,
- la détermination de la position relative entre la première et la deuxième partie,
- la comparaison de la position relative filtrée à la valeur de la consigne de position,
- l'ajustement de la consigne de vitesse.

16. Procédé selon la revendication précédente, dans lequel la détermination de l'effort appliqué est obtenue par estimation de celui-ci à partir de la distance relative entre la première et la deuxième partie et d'au moins un paramètre de commande de la liaison.

## Patentansprüche

1. System zur Verbindung zwischen einem ersten (2) und einem zweiten (4) Teil, die dazu ausgelegt sind, sich relativ zu einander zu verlagern, umfassend eine Verbindung (6), die dazu ausgelegt ist, Kräfte zwischen dem ersten (2) und dem zweiten (4) Teil zu übertragen und Regelmittel für die Verbindung (6), umfassend Mittel zum Messen (10) eines Abstands (e), der das erste und das zweite Teil (2, 4) voneinander trennt, ein Frequenzfilter (12) für die Messungen, wobei das Frequenzfilter Werte der Messungen in einem gegebenen Frequenzband passieren lässt, sowie Mittel (14) zum Vergleichen dieser gefilterten Werte mit einem Sollwert (ec), wobei die Regelmittel die Verbindung (6) derart steuern, dass sie die Kräfte nur in dem gegebenen Frequenzband überträgt, **dadurch gekennzeichnet, dass** die Regelmittel eine erste Regelschleife (B1) umfassen, die eine Kraftregelschleife mit einem Kraftsollwert ist, der von einer zweiten Regelschleife stammt, wobei diese letztgenannte eine Geschwindigkeitsregelschleife (B2) mit einem Geschwindigkeitssollwert ist, der von einer dritten Regelschleife (B3) für die Relativposition des ersten und des zweiten Teils stammt.

2. System nach Anspruch 1, bei der die erste Regelschleife ein Frequenzfilter (212, 212.1') und einen Komparator für den Kraftsollwert und eine Kraft umfasst, die zwischen dem ersten und dem zweiten Teil ausgeübt wird, und bei dem die zweite Regelschleife ein Frequenzfilter (230, 230.1') und einen Komparator (228) für den Geschwindigkeitssollwert und eine Relativgeschwindigkeit des ersten und des zweiten Teils umfasst.

3. System nach Anspruch 1 oder 2, bei dem die erste Regelschleife Mittel umfasst zur Bestimmung der Kraft, die zwischen dem ersten (2) und dem zweiten (4) Teil ausgeübt wird, wobei die Mittel die ausgeübte Kraft anhand der Relativposition des ersten (2) und des zweiten (4) Teils und eines Verbindungssteuerungsparameters abschätzen.

4. System zur Verbindung nach einem der Ansprüche 1 bis 3, bei dem die Verbindung (6, 106) vom elektromagnetischen, elektrostatischen, piezoelektrischen, elektrischen oder magnetorestiktiven Typ ist.

5. System zur Verbindung nach Anspruch 4, bei dem die elektrostatische Verbindung ein weiches dielektrisches Polymer umfasst, das eine Vergrößerung des elektrischen Felds zwischen dem ersten und dem zweiten Teil erlaubt.

6. System nach einem der Ansprüche 1 bis 5, bei dem die Verbindung (6, 106) eine Kraft in den beiden Verlagerungsrichtungen des ersten und des zweiten Teils ausüben kann.

7. System nach einem der Ansprüche 1 bis 6, bei dem der Sollwert (ec) konstant ist.

8. System nach einem der Ansprüche 1 bis 7, bei dem das Filter (12) ein Tiefpassfilter ist, sodass nur niederfrequente Kräfte vom zweiten auf das erste Teil übertragen werden.

9. System nach dem vorhergehenden Anspruch, bei dem die Abschneidefrequenz des Tiefpassfilters einige Hertz beträgt, in der Größenordnung von 50 Hz.

10. System nach einem der vorhergehenden Ansprüche, bei dem das Filter derart dimensioniert ist, dass bei offener Schleife die globale Phasenverschiebung des Systems bei ungefähr -135° um die Abschneidefrequenz des Filters bei geschlossener Schleife gehalten wird.

11. System nach Anspruch 8 oder 9, umfassend eine Beschleunigungsregelschleife (40), die ausgestattet ist mit Mitteln zur Messung (42) einer Beschleunigung des ersten Teils (2) sowie einem Hochpassfilter (44) zum Filtern der Beschleunigung, wobei die gefilterte Beschleunigung an den Komparator (14) übertragen wird, um zur Steuerung der Verbindung (6) verwendet zu werden.

12. Anordnung aus einem ersten und einem zweiten Teil, wobei das erste Teil fest ist, wobei das zweite Teil bezüglich des ersten Teils beweglich ist, wobei mechanische Mittel vorgesehen sind zur Verlagerung des zweiten Teils des bezüglich des ersten Teils, und umfassend ein System zur Verbindung nach einem der Ansprüche 1 bis 11, bei dem die Geschwindigkeitsregelschleife ein Tiefpassfilter umfasst und die Kraftregelschleife ein Tiefpassfilter umfasst.

13. Gerät, umfassend eine Vorrichtung (22), einen Träger (21) und wenigstens ein System zur Verbindung (S), vorzugsweise vier, nach Anspruch 1 bis 11, zum Aufhängen der Vorrichtung (22) an dem Träger (21).

14. Gerät nach Anspruch 13, bei dem jedes System zur Verbindung (S) durch Kugelgelenkverbindungen mit den Trägern (21) und mit der Vorrichtung (22) verbunden ist.

15. Verfahren zur Steuerung einer kontaktlosen Verbindung zwischen einem ersten und einem zweiten Teil, umfassend:
- die Bestimmung der Kraft, die zwischen dem ersten und dem zweiten Teil ausgeübt wird,
- die Frequenzfilterung der ausgeübten Kraft,
- den Vergleich zwischen dem gefilterten Wert und dem Sollwert der Kraft,
- die Kraftsteuerung der Verbindung als Funktion des Vergleichsergebnisses,
- die Bestimmung der Relativgeschwindigkeit zwischen dem ersten und dem zweiten Teil,
- die Frequenzfilterung der bestimmten Relativgeschwindigkeit,
- den Vergleich zwischen der gefilterten Relativgeschwindigkeit und dem Sollwert der Kraft,
- die Anpassung des Kraftsollwerts,
- die Bestimmung der Relativposition zwischen dem ersten und dem zweiten Teil,
- den Vergleich der gefilterten Relativposition mit dem Positionssollwert,
- die Anpassung des Geschwindigkeitssollwerts.

16. Verfahren nach dem vorhergehenden Anspruch, bei dem die Bestimmung der ausgeübten Kraft erhalten wird durch Abschätzung derselben ausgehend von dem Relativabstand zwischen dem ersten und dem zweiten Teil und wenigstens einem Verbindungssteuerungsparameter.

## Claims

1. Linkage system between a first part (2) and a second part (4) capable of movement relative to each other, incorporating a link (6) capable of transmitting forces between the first (2) and second (4) parts and control means for said link (6) incorporating means of measuring (10) a distance (e) separating the first and second parts (2, 4), a frequency filter (12) for said measurements, said frequency filter letting through the values of said measures in a given frequency band and means (14) for comparing these filtered values with a set point (ec), said control means controlling the link (6) such that it transmits forces only in the given frequency band, **characterized in that** said control means comprise a first control loop (B1) which is a force control loop having a force set point emanating from a second control loop, said second control loop being a speed control loop (B2) having a speed set-point emanating from a third control loop (B3) controlling the relative position of said third and second part.

2. System according to claim 1, in which the first control loop includes a frequency filter (212.1, 212.1') and a comparator of a force set point and a force applied between the first and second parts and in which the second control loop includes a frequency filter (230, 320.1') and a comparator (228) of a speed set point and a relative speed between the first and second parts.

3. System according to the claim 1 or 2, in which the first control loop includes means for determining the force applied between the first (2) and second (4) parts, said means estimating the force applied by means of the relative position of the first (2) and second (4) parts and a link control parameter.

4. Linkage system according to one of claims 1 to 3, in which the link (6, 106) is of the electromagnetic, electrostatic, piezoelectric or magnetostrictive type.

5. Linkage system according to claim 4, in which the electrostatic linkage includes a flexible polymer dielectric allowing an increase of the electric field between the first and second parts.

6. System according to one of claims 1 to 5, in which the link (6) can apply a force in both directions of motion of the first and second parts.

7. System according to one of claims 1 to 6, in which the set point (ec) is constant.

8. System according to one of claims 1 to 7, in which the filter (12) is a low pass filter, and only low frequency forces are transmitted from the second part to the first part.

9. System according to the preceding claim, in which the cut-off frequency of the low pass filter is a few Hertz, say 50 Hz.

10. System according to any one of the preceding claims, in which the filter is dimensioned such that in open loop the overall phase shift of the system is maintained at about -135° around the cut-off frequency of the filter in closed loop.

11. System according to claim 8 or 9, including an acceleration control loop (40) provided with means (42) of measuring an acceleration of the first part (2) and a high pass filter (44) to filter said acceleration, said filtered acceleration being transmitted to the comparator (14) to be used to control said link (6).

12. Assembly of a first part and a second part, the first part being fixed, the second part being movable relative to the first part, mechanical means being provided to move the second part relative to the first part, and including a linkage system according to one of claims 1 to 11, in which the speed control loop includes a low pass filter and the force control loop includes a low pass filter.

13. Appliance including a device (22), a support (21), and at least one linkage system (S), advantageously four, according to claims 1 to 11, in order to suspend said device (22) at the support (21).

14. Appliance according to claim 13, in which each linkage system (S) is connected to the support (21) and to the device (22) by ball joint linkages.

15. Method for controlling a contactless linkage between a first part and a second part, including:
- determining the force applied between the first and second parts,
- filtering in frequency of the applied force,
- comparison between the filtered value and the value of the set point force,
- controlling the force of said link according to the result of the comparison,
- determining the relative speed between the first and second parts,
- filtering the relative speed determined,
- comparison between the filtered relative speed and the value of the set point force,
- adjusting the set point force,
- determining the relative position between the first and second parts,
- comparison of the filtered relative position with the value of the set point position,
- adjusting the set point speed,

16. Method according to the preceding claim, in which the determination of the force applied is obtained by estimating the latter from the relative distance between the first and second parts and at least one link control parameter.
